(19) **Europäisches Patentamt**
**European Patent Office**
**Office européen des brevets**

(11) **EP 4 383 887 A1**

(12) # EUROPEAN PATENT APPLICATION
published in accordance with Art. 153(4) EPC

(43) Date of publication:
**12.06.2024 Bulletin 2024/24**

(21) Application number: **21952808.0**

(22) Date of filing: **05.08.2021**

(51) International Patent Classification (IPC):
**H04W 72/04** $^{(2023.01)}$

(52) Cooperative Patent Classification (CPC):
**H04W 72/04**

(86) International application number:
**PCT/JP2021/029187**

(87) International publication number:
**WO 2023/012983 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
• **SHIBAIKE, Naoya**
**Tokyo 100-6150 (JP)**
• **MATSUMURA, Yuki**
**Tokyo 100-6150 (JP)**
• **NAGATA, Satoshi**
**Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL, RADIO COMMUNICATION METHOD, AND BASE STATION**

(57)    A terminal according to one aspect of the present disclosure includes a receiving section that receives a configuration of a sounding reference signal, and a control section that, when performing transmission of the sounding reference signal in a partial band of a part of a band determined by the configuration, determines at least one of a width of the partial band, a bandwidth of the sounding reference signal, and a frequency domain start location of the sounding reference signal. According to one aspect of the present disclosure, it is possible to appropriately transmit an SRS.

FIG. 6

**Description**

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

In existing LTE systems (for example, 3GPP Rel. 8 to Rel. 14), a user terminal (User Equipment (UE)) transmits uplink control information (UCI) by using at least one of a UL data channel (for example, a Physical Uplink Shared Channel (PUSCH)) and a UL control channel (for example, a Physical Uplink Control Channel (PUCCH)).

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, NR), enhancement of a sounding reference signal is under study.

However, in the enhancement of the SRS, a method for computing an SRS bandwidth / SRS sequence length / SRS frequency domain start location is indefinite. Unless such a computing method is definite, deterioration of communication quality, communication throughput, or the like may occur.

Thus, an object of the present disclosure is to provide a terminal, a radio communication method, and a base station that appropriately transmit an SRS.

Solution to Problem

A terminal according to one aspect of the present disclosure includes a receiving section that receives a configuration of a sounding reference signal, and a control section that, when performing transmission of the sounding reference signal in a partial band of a part of a band determined by the configuration, determines at least one of a width of the partial band, a bandwidth of the sounding reference signal, and a frequency domain start location of the sounding reference signal.

Advantageous Effects of Invention

According to one aspect of the present disclosure, it is possible to appropriately transmit an SRS.

Brief Description of Drawings

[FIG. 1] FIG. 1 is a diagram to show an example of SRS band configuration.
[FIG. 2] FIG. 2 is a diagram to show an example of a band for SRS frequency hopping.

[FIG. 3] FIG. 3 is a diagram to show an example of SRS frequency hopping.

[FIG. 4] FIG. 4 is a diagram to show another example of the SRS frequency hopping.

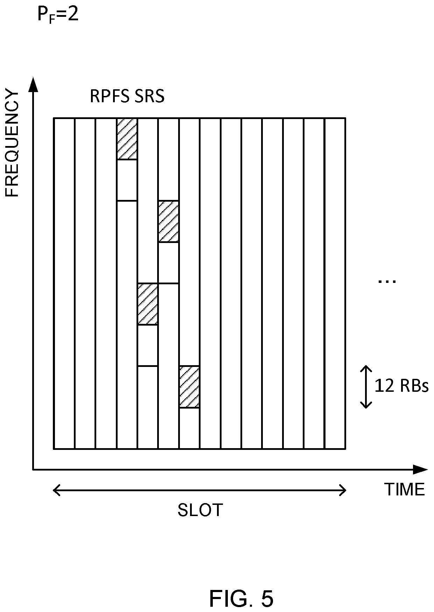

[FIG. 5] FIG. 5 is a diagram to show an example of an RPFS SRS.

[FIG. 6] FIG. 6 is a diagram to show a frequency domain start location of an RPFS SRS.

[FIG. 7] FIG. 7 is a diagram to show an example of a schematic structure of a radio communication system according to one embodiment.

[FIG. 8] FIG. 8 is a diagram to show an example of a structure of a base station according to one embodiment.

[FIG. 9] FIG. 9 is a diagram to show an example of a structure of a user terminal according to one embodiment.

[FIG. 10] FIG. 10 is a diagram to show an example of a hardware structure of the base station and the user terminal according to one embodiment.

Description of Embodiments

(SRS)

In NR, sounding reference signal (SRS) usage has diversity. SRSs in NR are used not only for uplink (UL) CSI measurement also used in existing LTE (LTE Rel. 8 to 14), but also for downlink (DL) CSI measurement, beam management, and the like.

One or a plurality of SRS resources may be configured for a UE. The SRS resource may be identified by an SRS resource index (SRI).

Each SRS resource may have one or a plurality of SRS ports (may correspond to one or a plurality of SRS ports). For example, the number of ports for each SRS may be 1, 2, 4, or the like.

One or a plurality of SRS resource sets may be configured for the UE. One SRS resource set may be related to a certain number of SRS resources. The UE may use a higher layer parameter in common for SRS resources included in one SRS resource set. Note that a resource set in the present disclosure may be interpreted as a set, a resource group, a group, or the like.

Information related to an SRS resource or a resource set may be configured for the UE by using higher layer signaling, physical layer signaling (for example, downlink control information (DCI)), or a combination of these.

SRS configuration information (for example, an RRC information element "SRS-Config") may include SRS resource set configuration information, SRS resource configuration information, and the like.

The SRS resource set configuration information (for example, an RRC parameter "SRS-ResourceSet") may include an SRS resource set ID (Identifier) (SRS-ResourceSetId), a list of SRS resource IDs (SRS-ResourceId) used in the resource set, an SRS resource type, information about SRS usage, and the like.

Here, the SRS resource type may indicate any one of a periodic SRS (P-SRS), a semi-persistent SRS (SP-SRS), and an aperiodic SRS (A-SRS). Note that the UE may periodically (or, after activation, periodically) transmit the P-SRS and the SP-SRS. The UE may transmit the A-SRS on the basis of an SRS request from the DCI.

The SRS usage (an RRC parameter "usage" or an L1 (Layer-1) parameter "SRS-SetUse") may be, for example, beam management, codebook, non-codebook, antenna switching, or the like. An SRS for codebook or non-codebook usage may be used for determination of a precoder for codebook-based or non-codebook-based uplink shared channel (Physical Uplink Shared Channel (PUSCH)) transmission based on the SRI.

For an SRS for beam management usage, it may be assumed that only one SRS resource can be transmitted for each SRS resource set in a certain time instant. Note that when a plurality of SRS resources belong to different SRS resource sets, these SRS resources may be transmitted simultaneously.

The SRS resource configuration information (for example, an RRC parameter "SRS-Resource") may include information related to an SRS resource ID (SRS-ResourceId), the number of SRS ports, an SRS port number, a transmission comb, SRS resource mapping (for example, a time and/or frequency resource location, resource offset, a resource periodicity, the number of repetitions, the number of SRS symbols, an SRS bandwidth, or the like), hopping, an SRS resource type, a sequence ID, a spatial relation, and the like.

The UE may transmit the SRS in adjacent symbols for the number of SRS symbols, out of the last 6 symbols in 1 slot. Note that the number of SRS symbols may be 1, 2, 4, or the like.

For each slot, the UE may switch a BWP (Bandwidth Part) for transmitting the SRS, or may switch an antenna. The UE may apply, to SRS transmission, at least one of intra-slot hopping and inter-slot hopping.

The number of times of multiplexing in a frequency direction may be 12 when a cyclic shift is used, and may be 4 when a comb is used.

(SRS Bandwidth Configuration)

In Rel. 16 specifications, an SRS bandwidth is defined. $C_{SRS} \in \{0, ..., 63\}$ (configuration index, row index) and

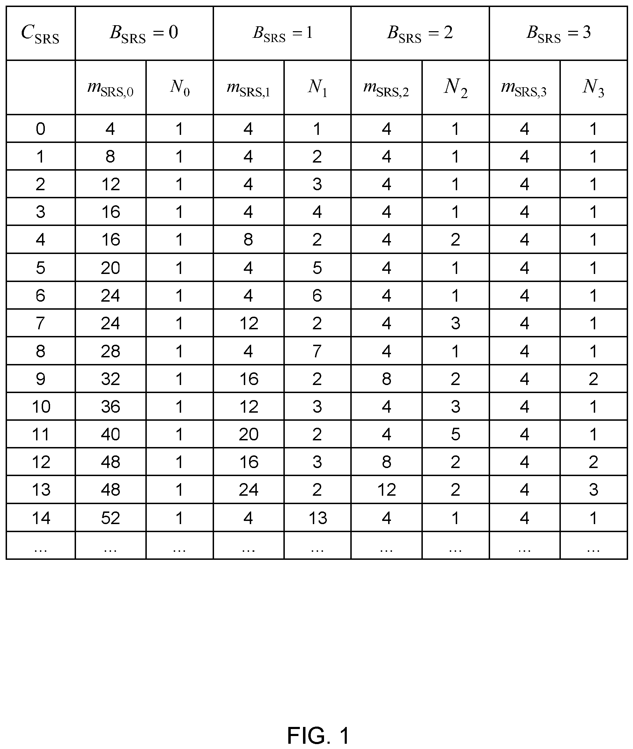

$B_{SRS} \in \{0, 1, 2, 3\}$ (the number of boundaries of band division) are configured by using higher layer signaling, and the SRS bandwidth is determined by using a table (association, mapping) shown in FIG. 1.

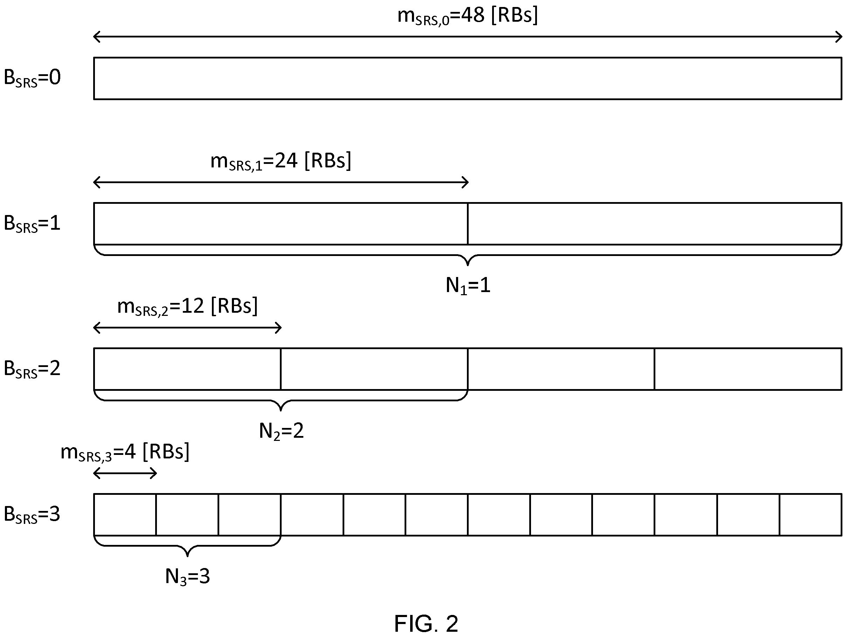

As shown in an example shown in FIG. 2, an available bandwidth is divided into some parts by using $B_{SRS}$. A plurality of parts are used for SRS hopping. $C_{SRS}$ configures a set of SRS bands. $B_{SRS}$ selects one bandwidth out of the configured set. This example shows a case where $C_{SRS} = 13$. All candidate values for SRS bandwidth $m_{SRS,b}$ (the number of RBs) are multiples of 4. $B_{SRS}$ divides the available bandwidth into a plurality of parts. The greater $B_{SRS}$ is, the larger the number of frequency sections becomes (the smaller a size of a frequency section becomes).

Parameter $b_{hop}$ E $\{0, 1, 2, 3\}$ is configured for SRS frequency hopping. When $b_{hop} < B_{SRS}$, the SRS frequency hopping is enabled.

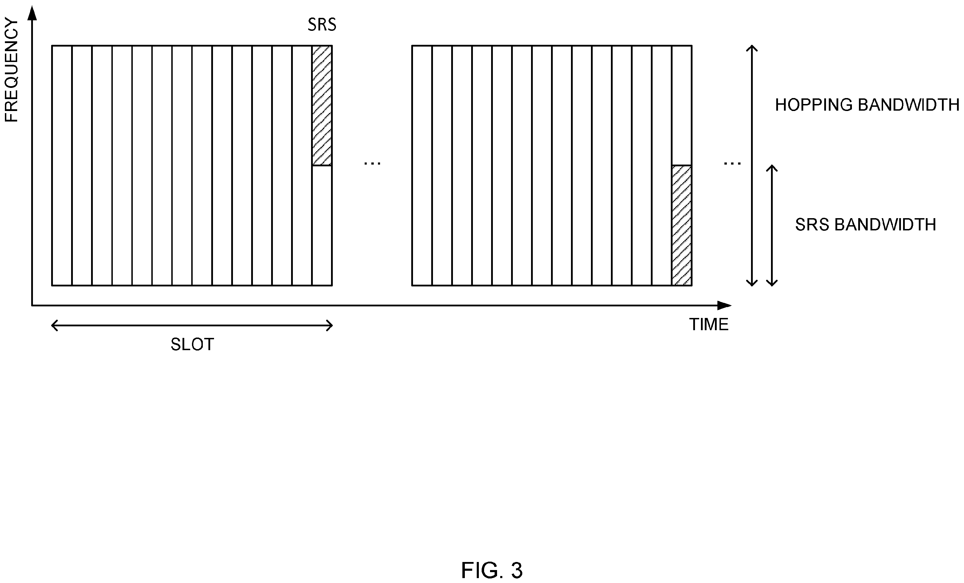

FIG. 3 shows an example of the SRS frequency hopping in a case where $C_{SRS} = 24$, $b_{hop} = 0$, $B_{SRS} = 2$, and $N_{symb}^{SRS} = 4$. In a band (hopping band) given to the SRS frequency hopping, an SRS having SRS band $m_{SRS,b}$ (in this example, 12 RBs) is transmitted.

RB-level partial frequency sounding (resource block (RB)-level partial frequency sounding (RPFS)) using the SRS is under study.

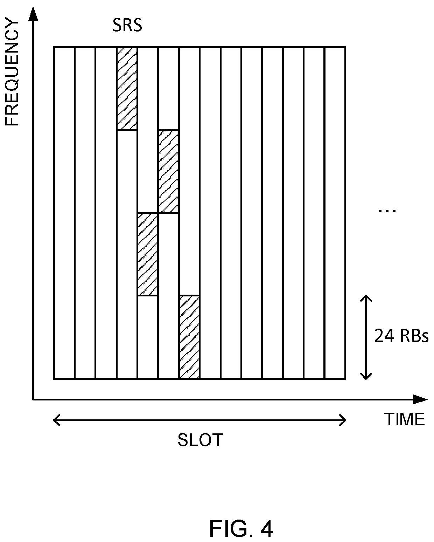

FIG. 4 shows an example of RPFS SRS frequency hopping in a case where the number $P_F$ of parts = 2, in addition to the configuration in FIG. 3. In each hop, SRS transmission may be performed across a bandwidth of $1/P_F$ of the available bandwidth.

A start RB index of $1/P_F * m_{SRS,BSRS}$ RBs out of $m_{SRS,BSRS}$ RBs may be given by the following equation.

$$N_{offset} = k_F / P_F * m_{SRS,BSRS}$$

Here, $k_F$ may be equal to $\{0, ..., P_F - 1\}$.

According to the RPFS SRS, partial band sounding allocates available transmission power to sections with smaller bandwidths, as compared to those in full band sounding, and thus a method for increasing power per subcarrier is provided. Furthermore, an occasion for multiplexing more UE ports is given to a network on a remaining frequency resource, thereby allowing SRS capacity to be expanded. A broad band can be sounded by using a fewer number of times, as compared to that in a case where a narrow band is allocated by existing (Rel. 16) SRS transmission.

In an existing SRS, frequency domain start location $k_0^{pi}$ is given by the following equation.

$$k_0^{pi} = k^-{}_0^{pi} + \Sigma_{b=0}^{BSRS} K_{TC} M_{SC,b}^{SRS} n_b$$

In the present disclosure, k- indicates a variable obtained by adding an overline to k, and may also be referred to as k bar.

In RPFS operation, a method for computing an SRS bandwidth / SRS sequence length / SRS frequency domain start location is indefinite. Unless such a computing method is definite, deterioration of communication quality, communication throughput, or the like may occur.

Thus, the inventors of the present invention came up with the idea of a method for computing an SRS bandwidth / SRS sequence length / SRS frequency domain start location.

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interchangeably interpreted. In the present disclosure, a cell, a serving cell, a CC, a carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, a sequence, a list, a set, a group, a cluster, a subset, and the like may be interchangeably interpreted. In the present disclosure, "support," "control," "controllable," "operate," and "operable" may be interchangeably interpreted.

In the present disclosure, configuration (configure), activation (activate), update, indication (indicate), enabling (enable), specification (specify), and selection (select) may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC, RRC signaling, an RRC parameter, a higher layer parameter, an RRC information element (IE), an RRC message, and configuration may be interchangeably interpreted.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

(Radio Communication Method)

A UE may receive a configuration of an SRS (for example, an SRS configuration or an SRS band configuration). The UE may, when performing transmission of the SRS (for example, an RPFS SRS) in a partial band of a part of a band determined by the configuration, determine at least one of a width of the partial band (for example, an RPFS SRS bandwidth), a bandwidth of the SRS (for example, an RPFS SRS sequence length), and a frequency domain start location (for example, $k_0^{pi}$) for the SRS.

In the present disclosure, partial frequency sounding (PFS), RB-level partial frequency sounding (RPFS), a new SRS, and an SRS in Rel. 17 (or later versions) may be interchangeably interpreted.

In the present disclosure, a partial band, a part, RPFS, an SRS band, a band having a part of an SRS bandwidth, the number of RBs used for SRS transmission, a band used for one hop, and $1/P_F * m_{SRS,BSRS}$ RBs out of $m_{SRS,BSRS}$ RBs may be interchangeably interpreted. In the present disclosure, a partial bandwidth, RPFS, an SRS bandwidth, and a width of a partial band may be interchangeably interpreted.

In the present disclosure, RPFS, an SRS sequence length, the number of subcarriers used for SRS transmission, and the number of subcarriers used for one hop may be interchangeably interpreted.

In the present disclosure, a frequency domain start location, an RPFS SRS frequency domain start location, and a frequency domain start location of each hop may be interchangeably interpreted.

In the present disclosure, $k_0^{pi}$ may be a frequency domain start location based on comb configuration (transmissioncomb, comb value (interval, the number of subcarriers), comb offset (the number of subcarriers)). In the present disclosure, $K_{TC}$ may be a comb value (interval, the number of subcarriers) based on comb configuration (transmissioncomb). In the present disclosure, $\Sigma_{b=0}^{BSRS} x_b$ may be the sum of $x_b$ for b = 0, 1, ..., $B_{SRS}$.

In the present disclosure, floor (x, y) is a multiple of maximum y not exceeding x, and may be represented as floor (x/y) * y. In the present disclosure, a floor function, a ceil (ceiling) function, and a round function may be interchangeably interpreted. In the present disclosure, $P_F$, the number of parts, and a first number may be interchangeably interpreted. In the present disclosure, X and a second number may be interchangeably interpreted. In the present disclosure, M and a lower limit value may be interchangeably interpreted.

<First Embodiment>

This embodiment relates to a method for computing an RPFS SRS bandwidth. The RPFS SRS bandwidth may be defined as the number of RBs.

<<Aspect 1-1>>

The RPFS SRS bandwidth may be defined as a variable different from existing (Rel. 15/16) SRS bandwidth $m_{SRS,b}$.

The RPFS SRS bandwidth may be defined as $m_{SRS,b}^{RPFS}$ (alternatively, $m_{SRS,b}^{PFS}$ or the like) .

<<Aspect 1-2>>

The RPFS SRS bandwidth may be defined by a combination of existing (Rel. 15/16) SRS bandwidth $m_{SRS,b}$ and a specific variable (new variable).

The specific variable may be the number $P_F$ of parts. The RPFS SRS bandwidth may be defined by the following equation.

$$m_{SRS,b}^{RPFS} = m_{SRS,b} / P_F$$

<<Aspect 1-3>>

An equation for RPFS SRS bandwidth $m_{SRS,b}^{RPFS}$ in a case where SRS bandwidth $m_{SRS,b}$ is indivisible by the number $P_F$ of parts (case where $m_{SRS,b}^{RPFS} / P_F$ is not an integer) may be defined. The equation for the RPFS SRS bandwidth may include limitation to a value to be computed. The limitation may be any one of limitation 1 to limitation 3 below.

[Limitation 1]

The RPFS SRS bandwidth may be an integer. For example, the RPFS SRS bandwidth may be defined by the following equation.

$$m_{SRS,b}{}^{RPFS} = \text{floor } (m_{SRS,b} / P_F))$$

[Limitation 2]

The RPFS SRS bandwidth may be a multiple of X. X may be 4, or may be another integer (for example, 2, 6, 8, or the like). For example, the RPFS SRS bandwidth may be defined by the following equation.

$$m_{SRS,b}{}^{RPFS} = \text{floor } (m_{SRS,b} / P_F, 4)$$

[Limitation 3]

A minimum value of the RPFS SRS bandwidth may be M. M may be 4, or may be another integer (for example, 2, 6, 8, or the like). For example, the RPFS SRS bandwidth may be defined by the following equation.

$$m_{SRS,b}{}^{RPFS} = \text{max } (\text{floor } (m_{SRS,b} / P_F), 4)$$

or

$$m_{SRS,b}{}^{RPFS} = \text{max } (\text{floor } (m_{SRS,b} / P_F, 4), 4)$$

According to this embodiment, a UE can appropriately use an RPFS SRS bandwidth.

<Second Embodiment>

This embodiment relates to a method for computing an RPFS SRS sequence length. The RPFS SRS sequence length may be defined as the number of subcarriers. The RPFS SRS sequence length may be defined as $SRS_{RPFS}$ (alternatively, $M_{SC, b}{}^{RPFS}$, $M_{SC, b}{}^{PFS}$, or the like) .

<<Aspect 2-1>>

The RPFS SRS sequence length may be defined by a combination of existing (Rel. 15/16) SRS sequence length (the following equation) and a specific variable.

$$M_{SC, b}{}^{SRS} = m_{SRS,b} * N_{SC}{}^{RB} / K_{TC}$$

The specific variable may be the number $P_F$ of parts.
A UE can compute the SRS sequence length, the existing SRS sequence length, or the RPFS SRS sequence length on the basis of a value of the specific variable. The UE can perform existing SRS operation or RPFS SRS operation on the basis of one equation, and thus UE operation can be simplified.

<<Aspect 2-2>>

An equation for the RPFS SRS sequence length may be defined. The equation for the RPFS SRS sequence length may be different from the following equation for the existing (Rel. 15/16) SRS sequence length.

$$M_{SC, b}{}^{SRS} = m_{SRS,b} * N_{SC}{}^{RB} / K_{TC}$$

In the equation for the RPFS SRS sequence length, at least one of the following parameters may be considered (at least one of the following parameters may be included).

[Parameter 1]

The number $P_F$ of parts (factor for computing an RPFS bandwidth on the basis of an existing SRS bandwidth).

[Parameter 2]

SRS sequence length $M_{SC,b}^{SRS}$ (existing SRS sequence length) The SRS sequence length may be interpreted as $m_{SRS,b} * N_{SC}^{RB} / K_{TC}$.
The equation for the RPFS SRS sequence length may include limitation to a value to be computed. The limitation may be any one of limitation 1 to limitation 3 below.

[Limitation 1]

The RPFS SRS sequence length may be an integer. For example, the RPFS SRS sequence length may be defined by the following equation.

$$\text{SRS}_{RPFS} = \text{floor } (\text{M}_{SC,b}^{SRS} / \text{P}_F)$$

[Limitation 2]

The RPFS SRS sequence length may be a multiple of X. X may be a multiple of 12, may be $4 \times 12 = 48$, or may be another integer (for example, 2, 6, 8, 12, 24, 36, 48, or the like). For example, the RPFS SRS sequence length may be defined by the following equation.

$$\text{SRS}_{RPFS} = \text{floor } (\text{M}_{SC,b}^{SRS} / \text{P}_F, 4)$$

[Limitation 3]

A minimum value of the RPFS SRS sequence length may be M. M may be 4, may be a multiple of 12, may be $4 \times 12 = 48$, or may be another integer (for example, 2, 6, 8, 12, 24, 36, 48, or the like). For example, the RPFS SRS sequence length may be defined by the following equation.

$$\text{SRS}_{RPFS} = \text{max } (\text{floor } (\text{M}_{SC,b}^{SRS} / \text{P}_F), 48)$$

or

$$\text{SRS}_{RPFS} = \text{max } (\text{floor } (\text{M}_{SC,b}^{SRS} / \text{P}_F, 48), 48)$$

According to the RPFS SRS sequence length in this embodiment, it is possible to use a method for computing an existing SRS bandwidth / frequency domain start location.

<Third Embodiment>

This embodiment relates to a method for computing an SRS resource frequency domain start location.

<<Aspect 3-1>>

An equation for an RPFS frequency domain start location may be defined by adding a specific variable (new variable) to an equation for an existing (Rel. 15/16) frequency domain start location "$k_0^{pi} = \bar{k}_0^{pi} + \Sigma_{b=0}^{BSRS} K_{TC} M_{SC,b}^{SRS} n_b$." The specific variable may be any one of variable 1 to variable 3 below.

[Variable 1]

The specific variable may be at least one of the number $P_F$ of parts, partial index $k_F$, the number $N_{SC}^{RB}$ of subcarriers in an RB (for example, 12), start RB index $N_{offset}$ of a partial band, and RPFS SRS sequence length $SRS_{RPFS}$. $k_F$ may be equal to $\{0, ..., P_F - 1\}$.

The frequency domain start location may be defined by the following equation.

$$k_0{}^{pi} = k^-{}_0{}^{pi} + \Sigma_{b=0}{}^{BSRS} K_{TC} * P_F * M_{SC,b}{}^{SRS} * n_b$$

A UE may select, on the basis of configuration of a $P_F$ value, either a method for computing the existing frequency domain start location or a method for computing the frequency domain start location of an RPFS SRS.

$P_F$ may be added to the frequency domain start location.

The frequency domain start location may be defined by the following equation.

$$k_0{}^{pi} = k^-{}_0{}^{pi} + \Sigma_{b=0}{}^{BSRS} K_{TC} * P_F * M_{SC,b}{}^{SRS} * n_b + k_F / P_F * m_{SRS,BSRS} * N_{SC}{}^{RB}$$

According to this equation, the UE can compute the frequency domain start location of the RPFS SRS on the basis of RPFS bandwidth $P_F * M_{SC,b}{}^{SRS}$ and $k_F$ for a frequency domain start location of an RPFS SRS in an SRS band in Rel. 16.

The specific variable may be SRS sequence length $SRS_{RPFS}$ in aspect 2-2 or $P_F$. The frequency domain start location may be defined by the following equation.

$$k_0{}^{pi} = k^-{}_0{}^{pi} + \Sigma_{b=0}{}^{BSRS} K_{TC} * P_F * SRS_{RPFS} * n_b + k_F / P_F * m_{SRS,BSRS} * N_{SC}{}^{RB}$$

The specific variable may be SRS sequence length $SRS_{RPFS}$ in aspect 2-2, $P_F$, or $N_{offset}$. The frequency domain start location may be defined by the following equation.

$$k_0{}^{pi} = k^-{}_0{}^{pi} + \Sigma_{b=0}{}^{BSRS} K_{TC} * P_F * SRS_{RPFS} * n_b + N_{offset} * N_{SC}{}^{RB}$$

The specific variable may be SRS sequence length $SRS_{RPFS}$ in aspect 2-2, $P_F$, or $N_{offset}$. The frequency domain start location may be defined by the following equation.

$$k_0{}^{pi} = k^-{}_0{}^{pi} + \Sigma_{b=0}{}^{BSRS} K_{TC} * P_F * SRS_{RPFS} * n_b + (N_{offset} - P_F * SRS_{RPFS})$$

The specific variable may be $P_F$. The frequency domain start location may be defined by the following equation.

$$k_0{}^{pi} = k^-{}_0{}^{pi} + \Sigma_{b=0}{}^{BSRS} K_{TC} * P_F * M_{SC,b}{}^{SRS} * n_b + (k_F - 1) / P_F * m_{SRS,BSRS}$$

According to this equation, the UE can compute the frequency domain start location of the RPFS SRS on the basis of RPFS bandwidth $P_F M_{SC,b}{}^{SRS}$ and $k_F$ for a frequency domain start location of an RPFS SRS in an SRS band in Rel. 16.

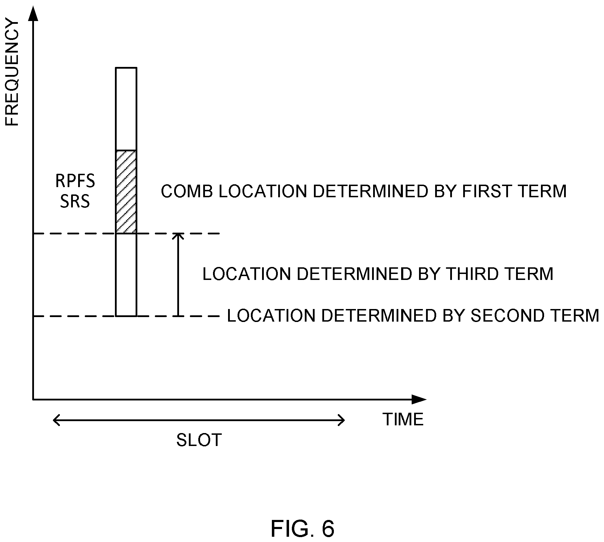

In an example shown in FIG. 6, a reference location (start RB index) of the hop (partial band) is determined by the second term of an equation (following equation) for the frequency domain start location, offset from the reference location is determined by the third term, and comb-based SRS sequence arrangement is determined by the first term.

$$k_0{}^{pi} = k^-{}_0{}^{pi} + \Sigma_{b=0}{}^{BSRS} K_{TC} * P_F * M_{SC,b}{}^{SRS} * n_b + (k_F - 1) / P_F * m_{SRS,BSRS}$$

[Variable 2]

The specific variable may be an RPFS bandwidth / RPFS SRS sequence length. The specific variable may be an RPFS SRS sequence length computed in accordance with aspect 2-2.

The specific variable may be the RPFS SRS sequence length in aspect 2-1.

[Variable 3]

The specific variable may be a start RB index of $1/P_F * m_{SRS,BSRS}$ RBs (partial bands) out of $m_{SRS,BSRS}$ RBs.

The start RB index may be given by the following equation.

$$N_{offset} = k_F \ / \ P_F \ * \ m_{SRS,BSRS}$$

Here, $k_F$ may be equal to $\{0, ..., P_F - 1\}$.

The equation for the RPFS frequency domain start location may be defined by changing an existing variable in an equation (following equation) for an existing (Rel. 15/16) frequency domain start location.

$$k_0^{pi} = k^-_0{}^{pi} + \Sigma_{b=0}^{BSRS} \ K_{TC} \ * \ M_{SC,b}^{SRS} \ * \ n_b$$

$M_{SC,b}^{SRS}$ may be omitted from the existing equation.

When the specific variable is added to the existing equation in aspect 2-2, $M_{SC,b}^{SRS}$ may be omitted from the existing equation.

<<Aspect 3-2>>

A new equation for the RPFS frequency domain start location may be defined. In the equation, any one of parameter 1 to parameter 3 below may be considered (may be used).

[Parameter 1]

At least one of existing (Rel. 15/16) frequency domain start location $k_0^{pi}$ and a term used for computation of $k_0^{pi}$ (for example, at least one of $k^-_0{}^{pi}$, $K_{TC}$, and $n_b$). In the computation of $k_0^{pi}$, $P_F$ may be considered.

The RPFS frequency domain start location may be defined by the following equation.

$$k_{RPFS}^{pi} = k^-_0{}^{pi} + \Sigma_{b=0}^{BSRS} \ K_{TC} \ * \ P_F \ * \ M_{SC,b}^{SRS} \ * \ n_b \ + \ N_{offset}$$

[Parameter 2]

The number $P_F$ of parts (factor for computing an RPFS bandwidth on the basis of an existing SRS bandwidth).

[Parameter 3]

The specific variable may be a start RB index of $1/P_F \ * \ m_{SRS,BSRS}$ RBs out of $m_{SRS,BSRS}$ RBs. The start RB index may be given by the following equation.

$$N_{offset} = k_F \ / \ P_F \ * \ m_{SRS,BSRS}$$

Here, $k_F$ may be equal to $\{0, ..., P_F - 1\}$.

According to this embodiment, it is possible to appropriately determine a frequency domain start location of an RPFS SRS.

<Other Embodiments>

<<UE Capability / Higher Layer Parameter>>

A higher layer parameter (RRC information element) / UE capability corresponding to at least one function (characteristic, feature) in the above embodiments may be defined. The UE capability may indicate whether to support this function.

A UE for which the higher layer parameter corresponding to the function is configured may perform the function. "A case that a UE for which the higher layer parameter corresponding to the function is not configured does not perform the function (for example, employs operation in Rel. 15/16)" may be defined.

A UE that has reported the UE capability indicating that the function is supported may perform the function. "A case that a UE that has not reported the UE capability indicating that the function is supported does not perform the function (for example, employs operation in Rel. 15/16)" may be defined.

When a UE has reported the UE capability indicating that the function is supported, and the higher layer parameter corresponding to the function is configured, the UE may perform the function. "A case that when a UE does not report the UE capability indicating that the function is supported or when the higher layer parameter corresponding to the function is not configured, the UE does not perform the function (for example, employs operation in Rel. 15/16)" may be defined.

The UE capability may indicate whether to support transmission of an RPFS SRS.

In at least one of a case where a UE has reported a UE capability related to an RPFS SRS and a case where a higher layer parameter related to the RPFS SRS is configured for the UE, the UE may compute, in accordance with the above embodiments, an RPFS SRS bandwidth / RPFS SRS sequence length / frequency domain start location.

In aspect 2-1, a value of the specific variable may vary between a case where a higher layer parameter related to an RPFS SRS is configured for the UE and a case where the higher layer parameter related to the RPFS SRS is not configured for the UE. When the higher layer parameter is configured for the UE, the value of the specific variable may follow the above embodiments. When the higher layer parameter is not configured for the UE, the value of the specific variable may be a specific value. The specific value may be 1. When the higher layer parameter is not configured for the UE, the UE may ignore the specific variable. When the higher layer parameter is not configured for the UE, the UE may use, as an equation for an SRS bandwidth / SRS sequence length / frequency domain start location, an equation in a Rel. 16 SRS.

In aspect 2-2, an equation for an SRS bandwidth / SRS sequence length / frequency domain start location may vary between a case where a higher layer parameter related to an RPFS SRS is configured for the UE and a case where the higher layer parameter related to the RPFS SRS is not configured for the UE. When the higher layer parameter is configured for the UE, the UE may use the equation in aspect 2-2. When the higher layer parameter is not configured for the UE, the UE may use an equation in a Rel. 16 SRS.

In aspect 3-1, a value of the specific variable / existing variable may vary between a case where a higher layer parameter related to an RPFS SRS is configured for the UE and a case where the higher layer parameter related to the RPFS SRS is not configured for the UE. When the higher layer parameter is configured for the UE, the value of the specific variable / existing variable may follow the above embodiments. When the higher layer parameter is not configured for the UE, the value of the specific variable may be a specific value. The specific value may be 1. When the higher layer parameter is not configured for the UE, the UE may ignore the specific variable. When the higher layer parameter is not configured for the UE, the UE may use, as an equation for an SRS bandwidth / SRS sequence length / frequency domain start location, an equation in a Rel. 16 SRS.

In aspect 3-2, an equation for an SRS bandwidth / SRS sequence length / frequency domain start location may vary between a case where a higher layer parameter related to an RPFS SRS is configured for the UE and a case where the higher layer parameter related to the RPFS SRS is not configured for the UE. When the higher layer parameter is configured for the UE, the UE may use the equation in aspect 3-2. When the higher layer parameter is not configured for the UE, the UE may use an equation in a Rel. 16 SRS.

According to the above UE capability / higher layer parameter, the UE can achieve the above-described function while maintaining compatibility with existing specifications.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

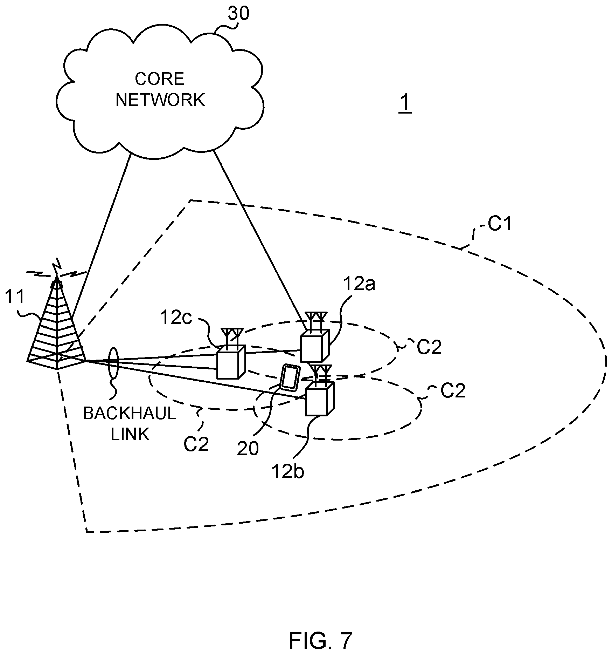

FIG. 7 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multicarrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

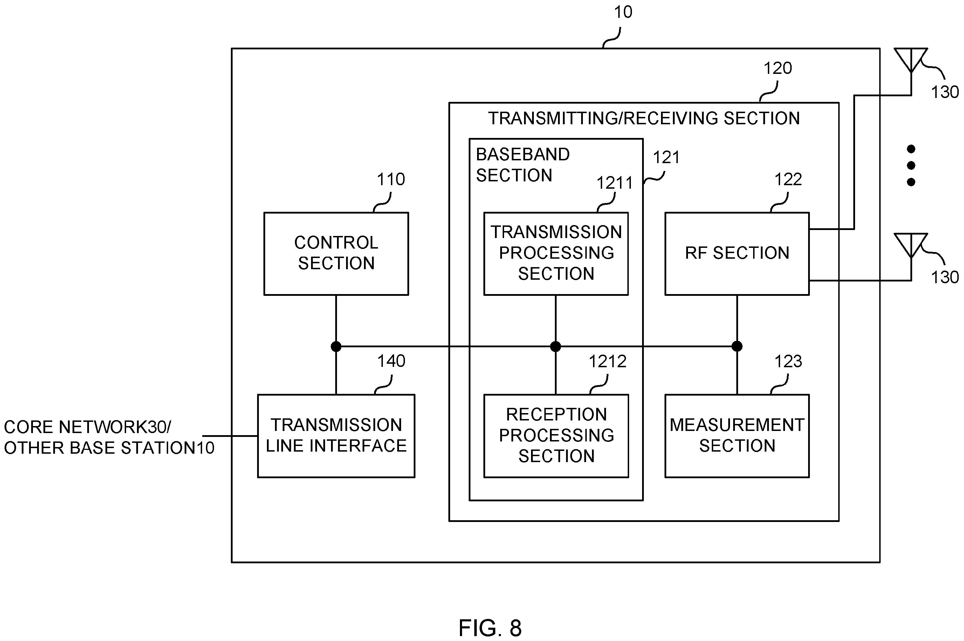

FIG. 8 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a configuration of a sounding reference signal. The control section 110 may, when performing reception of the sounding reference signal in a partial band of a part of a band determined by the configuration, determine at least one of a width of the partial band, a bandwidth of the sounding reference signal, and a frequency domain start location of the sounding reference signal.

(User Terminal)

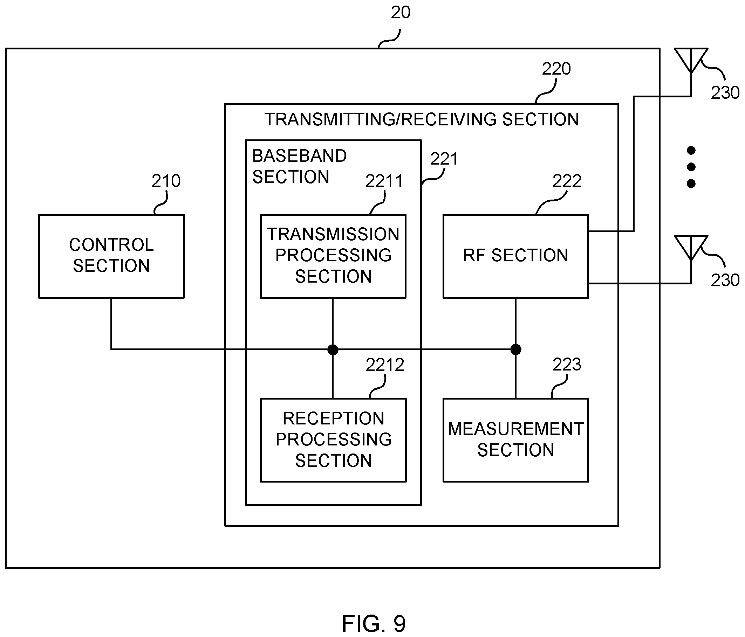

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration of a sounding reference signal. The control section 210 may, when performing transmission of the sounding reference signal in a partial band of a part of a band determined by the configuration, determine at least one of a width of the partial band, a bandwidth of the sounding reference signal, and a frequency domain start location of the sounding reference signal.

The width of the partial band may be obtained by dividing a width of the band by a first number.

The width of the partial band may be any one of an integer, a multiple of a second number, an integer greater than or equal to a lower limit value, and a multiple of the second number greater than or equal to the lower limit value.

The frequency domain start location may be obtained by adding offset to a start location of the partial band.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

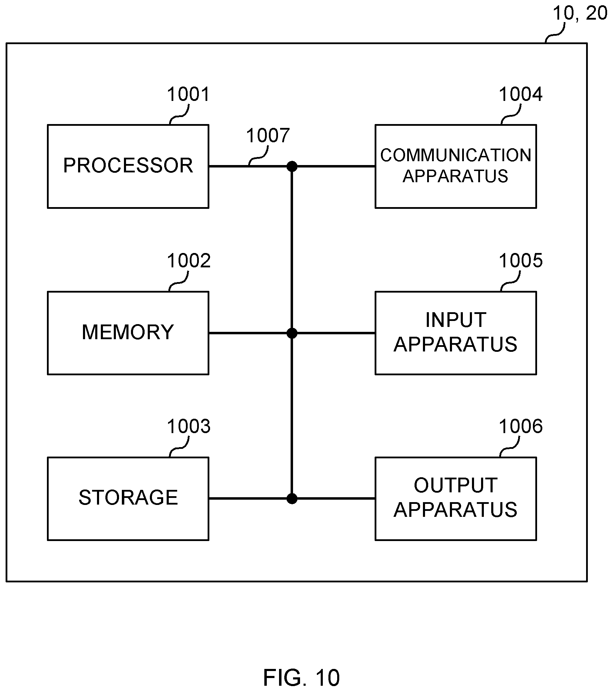

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs) .

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A terminal comprising:

   a receiving section that receives a configuration of a sounding reference signal; and
   a control section that, when performing transmission of the sounding reference signal in a partial band of a part of a band determined by the configuration, determines at least one of a width of the partial band, a bandwidth of the sounding reference signal, and a frequency domain start location of the sounding reference signal.

2. The terminal according to claim 1, wherein
   the width of the partial band is obtained by dividing a width of the band by a first number.

3. The terminal according to claim 2, wherein
   the width of the partial band is any one of an integer, a multiple of a second number, an integer greater than or equal to a lower limit value, and a multiple of the second number greater than or equal to the lower limit value.

4. The terminal according to any one of claims 1 to 3, wherein
   the frequency domain start location is obtained by adding offset to a start location of the partial band.

5. A radio communication method for a terminal comprising:

   receiving a configuration of a sounding reference signal; and
   determining, when performing transmission of the sounding reference signal in a partial band of a part of a band determined by the configuration, at least one of a width of the partial band, a bandwidth of the sounding reference signal, and a frequency domain start location of the sounding reference signal.

6. A base station comprising:

   a transmitting section that transmits a configuration of a sounding reference signal; and
   a control section that, when performing reception of the sounding reference signal in a partial band of a part of a band determined by the configuration, determines at least one of a width of the partial band, a bandwidth of the sounding reference signal, and a frequency domain start location of the sounding reference signal.

| $C_{\mathrm{SRS}}$ | $B_{\mathrm{SRS}}=0$ | | $B_{\mathrm{SRS}}=1$ | | $B_{\mathrm{SRS}}=2$ | | $B_{\mathrm{SRS}}=3$ | |
|---|---|---|---|---|---|---|---|---|
| | $m_{\mathrm{SRS},0}$ | $N_0$ | $m_{\mathrm{SRS},1}$ | $N_1$ | $m_{\mathrm{SRS},2}$ | $N_2$ | $m_{\mathrm{SRS},3}$ | $N_3$ |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| ... | ... | ... | ... | ... | ... | ... | ... | ... |

FIG. 1

FIG. 2

$m_{SRS,0}=48$ [RBs]

$B_{SRS}=0$

$m_{SRS,1}=24$ [RBs]

$B_{SRS}=1$

$N_1=1$

$m_{SRS,2}=12$ [RBs]

$B_{SRS}=2$

$N_2=2$

$m_{SRS,3}=4$ [RBs]

$B_{SRS}=3$

$N_3=3$

EP 4 383 887 A1

HOPPING BANDWIDTH

SRS BANDWIDTH

SRS

TIME

SLOT

FREQUENCY

FIG. 3

FIG. 4

EP 4 383 887 A1

$P_F = 2$

RPFS SRS

12 RBs

FREQUENCY

TIME

SLOT

FIG. 5

FIG. 6

FIG. 7

FIG. 8

FIG. 9

EP 4 383 887 A1

10, 20

| 1001 | 1007 | 1004 |
|---|---|---|
| PROCESSOR | | COMMUNICATION APPARATUS |

| 1002 | | 1005 |
|---|---|---|
| MEMORY | | INPUT APPARATUS |

| 1003 | | 1006 |
|---|---|---|
| STORAGE | | OUTPUT APPARATUS |

FIG. 10

## INTERNATIONAL SEARCH REPORT

| International application No. |
| --- |
| **PCT/JP2021/029187** |

### A. CLASSIFICATION OF SUBJECT MATTER

*H04W 72/04*(2009.01)i
FI:  H04W72/04 132; H04W72/04 136

According to International Patent Classification (IPC) or to both national classification and IPC

### B. FIELDS SEARCHED

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | LENOVO. MOTOROLA MOBILITY. Enhancements on SRS[online]. 3GPP TSG RAN WG1 #104b-e R1-2102842. 06 April 2021, in particular, section 2.3 | 1-2, 4-6 |
|  | section 2.3 |  |
| Y | section 2.3 | 3 |
| Y | MODERATOR (ZTE). FL summary #3 on SRS enhancements[online]. 3GPP TSG RAN WG1 #104b-e R1-2103928. 21 April 2021, in particular, section 1.2 | 3 |
|  | section 1.2 |  |
| A | HUAWEI. HISILICON. SRS Enhancements in Rel-17[online]. 3GPP TSG RAN WG1 #104b-e R1-2102338. 07 April 2021, in particular, section 5 | 1–6 |
|  | section 5 |  |

☐ Further documents are listed in the continuation of Box C.      ☐ See patent family annex.

| | |
| --- | --- |
| * Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **09 March 2022** | **22 March 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010